# EUROPEAN PATENT APPLICATION

(11) **EP 4 700 083 A1**
(43) Date of publication of application: **25.02.2026**
(21) Application number: 24857854.4
(22) Date of filing: 17.05.2024
(51) Int. Cl.: C08L 23/10, C08L 23/12

(54) **HIGH-VOLTAGE CABLE POLYPROPYLENE INSULATING MATERIAL, PREPARATION METHOD THEREFOR, AND USE THEREOF**

(30) Priority: 28.08.2023 CN 202311095107
(71) Applicant: Electric Power Research Institute. China Southern Power Grid, Guangzhou, Guangdong 510663 (CN)
(72) Inventor: HOU, Shuai, Guangzhou, Guangdong 510663 (CN); ZHAN, Yunpeng, Guangzhou, Guangdong 510663 (CN); FU, Mingli, Guangzhou, Guangdong 510663 (CN); FAN, Lingmeng, Guangzhou, Guangdong 510663 (CN); HUI, Baojun, Guangzhou, Guangdong 510663 (CN); JIA, Lei, Guangzhou, Guangdong 510663 (CN); ZHU, Wenbo, Guangzhou, Guangdong 510663 (CN); FENG, Bin, Guangzhou, Guangdong 510663 (CN); ZHANG, Yifan, Guangzhou, Guangdong 510663 (CN)
(74) Representative: Hoffmann Eitle
(86) International application number: PCT/CN2024/093958
(87) International publication number: WO 2025/044306

(57) **Abstract**

**In** the high-voltage cable polypropylene insulating material provided in the present application, the polypropylene in-reactor alloy resin serves as a backbone of the composite material, and can provide the high-voltage cable polypropylene insulating material with excellent thermal endurance. **In** addition, the thermoplastic polyolefin elastomer can induce interfacial shear bands or crazes, allowing the energy from an external force to be dissipated through the interfacial shear bands or crazes, thereby enabling the high-voltage cable polypropylene insulating material to maintain excellent mechanical strength even at high temperatures. Furthermore, in the present application, the polypropylene in-reactor alloy resin and the thermoplastic polyolefin elastomer demonstrate good compatibility therebetween, which enables the high-voltage cable polypropylene insulating material to have a relatively low flexural modulus and a relatively high breakdown field strength, resulting in excellent toughness and electrical performance, thereby meeting the application requirements for high-voltage cable polypropylene insulating materials.

## Description

### TECHNICAL FIELD

The present application relates to the field of electrical engineering materials, particularly relates to a polypropylene insulating material for high-voltage cables, a preparation method thereof, and use thereof.

### BACKGROUND

High-voltage cables, as a type of power cable, play a crucial role in national power transmission and distribution, smart power grid construction, etc. Currently, cross-linked polyethylene is the insulating material predominantly used for high-voltage cables. The cross-linked polyethylene insulated cables exhibit poor thermal endurance, which fails to meet the requirements of power transmission systems with higher capacities. Additionally, polyethylene cables are not recyclable at the end of their service life, leading to substantial waste and posing significant challenges to environmental protection.

Thermoplastic polypropylene high-voltage cables, which possess characteristics such as high operating temperature and recyclability, have emerged as a new generation of environmentally friendly cables that can replace cross-linked polyethylene cables. However, polypropylene cannot achieve both excellent thermal endurance and toughness when used as an insulating material for cables.

### SUMMARY

In view of this, the present application provides a high-voltage cable polypropylene insulating material, a preparation method thereof, and use thereof. The high-voltage cable polypropylene insulating material has excellent thermal endurance and toughness.

In a first aspect of the present application, a high-voltage cable polypropylene insulating material is provided, with the raw materials thereof including following parts by weight of components:

| | |
|---|---|
| a polypropylene in-reactor alloy resin: | 30 parts to 60 parts; |
| a thermoplastic polyolefin elastomer: | 40 parts to 70 parts; and |
| an antioxidant: | 0.3 parts to 1 part. |

In an embodiment, the polypropylene in-reactor alloy resin includes a rubber phase and a homopolymer polypropylene in a mass ratio ranged from 1:3 to 1:4.

In an embodiment, the degree of isotacticity of the homopolymer polypropylene is greater than or equal to 95%.

In an embodiment, the phase size of the rubber phase in the polypropylene in-reactor alloy resin is in a range from 0.2 µm to 1 µm.

In an embodiment, the rubber phase is selected from ethylene-propylene random copolymers.

In an embodiment, the thermoplastic polyolefin elastomer has one or more of following features:
(1) the density of the thermoplastic polyolefin elastomer is in a range from 0.85 g/cm³ to 0.89 g/cm³;
(2) the melt flow index of the thermoplastic polyolefin elastomer is in a range from 0.5 g/10 min to 0.8 g/10 min at 230 °C under a 2.16 kg load;
(3) the thermoplastic polyolefin elastomer is selected from polypropylene.

In an embodiment, the antioxidant is selected from hindered phenol antioxidants.

In a second aspect of the present application, a method for preparing the high-voltage cable polypropylene insulating material described in any one of the embodiments in the first aspect of the present application is provided, including the following steps:
melt-blending the polypropylene in-reactor alloy, the thermoplastic polyolefin elastomer, and the antioxidant in the specified parts by weight and extruding to prepare the high-voltage cable polypropylene insulating material;
wherein the temperature of the melt-blending is in a range from 150 °C to 200 °C.

In an embodiment, the time period of the melt-blending is in a range from 5 min to 15 min.

In a third aspect of the present application, use of the high-voltage cable polypropylene insulating material described in any one of the embodiments in the first aspect of the present application in high-voltage alternating current (AC) cable insulating materials is provided.

In the high-voltage cable polypropylene insulating material provided in the present application, the polypropylene in-reactor alloy resin serves as a backbone of the composite material, and can provide the high-voltage cable polypropylene insulating material with excellent thermal endurance. In addition, the thermoplastic polyolefin elastomer can induce interfacial shear bands or crazes, allowing energy from an external force to be dissipated through the interfacial shear bands or crazes, thereby enabling the high-voltage cable polypropylene insulating material to maintain excellent mechanical strength even at high temperatures. Furthermore, in the present application, the polypropylene in-reactor alloy resin and the thermoplastic polyolefin elastomer demonstrate good compatibility therebetween, which enables the high-voltage cable polypropylene insulating material to have a relatively low flexural modulus and a relatively high breakdown field strength, resulting in excellent toughness and electrical performance, thereby meeting the application requirements for high-voltage cable polypropylene insulating materials.

### BRIEF DESCRIPTION OF THE DRAWINGS

FIG. 1 is a bar graph showing flexural moduli of high-voltage cable polypropylene insulating materials prepared in Examples 1-4 and Comparative Examples 1-2 of the present application.
FIG. 2 is a bar graph showing breakdown field strengths of the high-voltage cable polypropylene insulating materials prepared in Examples 1-4 and Comparative Examples 1-2 of the present application.
FIG. 3 is a curve graph showing melting temperatures of the high-voltage cable polypropylene insulating materials prepared in Examples 1-4 and Comparative Examples 1-2 of the present application.

### DETAILED DESCRIPTION

The high-voltage cable polypropylene insulating material, as well as the preparation method and use of the high-voltage cable polypropylene insulating material in the present application will be further described completely and clearly in conjunction with specific embodiments. The present application can be implemented in many different forms, and is not limited to the embodiments described herein. On the contrary, the purpose of providing these embodiments is to provide a more thorough and comprehensive understanding of the disclosed content of the present application.

Unless defined otherwise, all technical and scientific terms used herein have the same meaning as commonly understood by one of ordinary skill in the art to which the present application belongs. The terminology used herein in the description of the present application is for the purpose of describing specific embodiments only and is not intended to be limiting of the application.

As used herein, "one or more" refers to any one or any two or more of the listed items.

In the present application, the terms "first aspect", "second aspect", "third aspect", "fourth aspect", "fifth aspect", and so on are for descriptive purposes only and shall not be understood as indicating or implying relative importance or quantity, nor as implying the importance or quantity of the indicated technical features. Moreover, "first", "second", "third", "fourth", "fifth", and so on are only for the purpose of non-exhaustive enumeration and description, and it should be understood that they do not constitute a closed limitation on the quantity.

In the present application, an open-ended description for the technical features includes not only a close-ended technical solution consisting of the recited technical features, but also an open-ended technical solution including the recited technical features.

In the present application, when a numerical range is involved, unless otherwise specified, the numerical range is continuous and includes both the minimum and maximum values of the range, as well as every value between the minimum and maximum values. Furthermore, when a range refers to integers, every integer between the minimum and maximum values of the range is included. In addition, when multiple ranges are provided to describe a feature or characteristic, these ranges can be combined. In other words, unless otherwise indicated, the ranges disclosed herein are to be understood to include any and all subranges subsumed therein.

In the present application, when an amount in percentage is mentioned, unless otherwise specified, it refers to mass percentage for both solid-liquid mixtures and solid-solid mixtures, and refers to volume percentage for liquid-liquid mixtures.

In the present application, when a concentration in percentage is mentioned, unless otherwise specified, it refers to the final concentration. The final concentration refers to the proportion of the added component in a system after the addition of that component.

In the present application, when a temperature parameter is mentioned, unless otherwise specifically defined, both a thermostatic treatment and a treatment within a certain temperature range are allowed. The thermostatic treatment permits temperature fluctuations within the precision range controlled by the instrument.

In the present application, unless otherwise specified, "degree of isotacticity" refers to the mass fraction of the isotactic part of the polymer in the total polymer, and is used to indicate the degree of stereoregularity of the isotactic polymer.

In a first aspect of the present application, a high-voltage cable polypropylene insulating material is provided, with the raw materials thereof including:

| | |
|---|---|
| a polypropylene in-reactor alloy resin: | 30 to 60 parts by weight; |
| a thermoplastic polyolefin elastomer: | 40 to 70 parts by weight; and |
| an antioxidant: | 0.3 to 1 part by weight. |

In the high-voltage cable polypropylene insulating material provided in the present application, the polypropylene in-reactor alloy resin serves as a backbone of the composite material, and can provide the high-voltage cable polypropylene insulating material with an excellent thermal endurance. In addition, the thermoplastic polyolefin elastomer can induce interfacial shear bands or crazes, allowing the energy from an external force to be dissipated through the interfacial shear bands or crazes, thereby enabling the high-voltage cable polypropylene insulating material to maintain excellent mechanical strength even at high temperatures. Furthermore, in the present application, the polypropylene in-reactor alloy resin and the thermoplastic polyolefin elastomer demonstrate good compatibility therebetween, which enables the high-voltage cable polypropylene insulating material to have a relatively low flexural modulus and a relatively high breakdown field strength, resulting in excellent toughness and electrical performance, thereby meeting the application requirements for high-voltage cable polypropylene insulating materials.

It should be understood that the parts by weight of the polypropylene in-reactor alloy resin can be any value selected from 30 parts to 60 parts. Specifically, the parts by weight of polypropylene alloy resin can be, but is not limited to, 30 parts, 35 parts, 38 parts, 40 parts, 45 parts, 50 parts, 52 parts, 55 parts, 58 parts, or 60 parts. The parts by weight of the thermoplastic polyolefin elastomer can be any value selected from 40 parts to 70 parts. Specifically, the parts by weight of the thermoplastic polyolefin elastomer can be, but is not limited to, 40 parts, 45 parts, 48 parts, 49 parts, 50 parts, 52 parts, 55 parts, 58 parts, 60 parts, 61 parts, 62 parts, 65 parts, or 70 parts. The parts by weight of the antioxidant can be any value selected from 0.3 parts to 1 part. Specifically, the parts by weight of the antioxidant can be, but is not limited to, 0.3 parts, 0.5 parts, 0.7 parts, 0.9 parts, or 1 part.

Preferably, the raw materials of the high-voltage cable polypropylene insulating material include following parts by weight of components:

| | |
|---|---|
| the polypropylene in-reactor alloy resin: | 38 to 52 parts by weight; |
| the thermoplastic polyolefin elastomer: | 48 to 62 parts by weight; and |
| the antioxidant: | 0.3 to 1 part by weight. |

In an embodiment, the polypropylene in-reactor alloy resin includes a rubber phase and a homopolymer polypropylene in a mass ratio ranged from 1:3 to 1:4.

In an embodiment, the degree of isotacticity of the homopolymer polypropylene is greater than or equal to 95%.

The conventional polypropylene in-reactor alloy resins, when used as high-voltage insulating materials, suffer from deficiencies such as insufficient toughness, poor electrical performance, relatively low breakdown field strength, and inferior thermal stability in high-temperature environments. In the present application, by selecting the homopolymer polypropylene with a degree of isotacticity greater than or equal to 95%, the regularity of the molecular chain can be ensured, which, in combination with the specific weight proportion of rubber, allows the polypropylene in-reactor alloy resin to have a relatively high crystallinity and a relatively great rigidity. As such, the polypropylene in-reactor alloy resin can serve as a backbone of the composite material, thereby improving the thermal endurance of the high-voltage cable polypropylene insulating material. Optionally, the parts by weight of the homopolymer polypropylene can be, but is not limited to, 80 parts, 82 parts, 85 parts, 90 parts, 93 parts, or 95 parts. The parts by weight of the rubber can be, but is not limited to, 5 parts, 8 parts, 10 parts, 15 parts, or 20 parts. The degree of isotacticity of the homopolymer polypropylene can be, but is not limited to, 95%, 96%, 97%, 98%, or 99%.

In an embodiment, the phase size of the rubber phase in the polypropylene in-reactor alloy resin is in a range from 0.2 µm to 1 µm. By specifying the phase size of the rubber phase, the impact of the rubber phase on the thermal endurance of the polypropylene in-reactor alloy resin can be reduced.

In an embodiment, the rubber phase is selected from ethylene-propylene random copolymers.

In an embodiment, the thermoplastic polyolefin elastomer has a density in a range from 0.85 g/cm³ to 0.89 g/cm³. It should be understood that the density of the thermoplastic polyolefin elastomer can be any value selected from 0.85 g/cm³ to 0.89 g/cm³. Specifically, the density of the thermoplastic polyolefin elastomer can be, but is not limited to, 0.85 g/cm³, 0.86 g/cm³, 0.87 g/cm³, 0.88 g/cm³, or 0.89 g/cm³.

In an embodiment, the thermoplastic polyolefin elastomer has a melt flow index in a range from 0.5 g/10 min to 0.8 g/10 min at 230 °C under a 2.16 kg load. It should be understood that the melt flow index of the thermoplastic polyolefin elastomer at 230 °C under a 2.16 kg load can be any value selected from 0.5 g/10 min to 0.8 g/10 min. Specifically, the melt flow index of the thermoplastic polyolefin elastomer can be, but is not limited to, 0.5 g/10 min, 0.6 g/10 min, 0.7 g/10 min, or 0.8 g/10 min. Selecting the density and the melt flow index of the thermoplastic polyolefin elastomer within these ranges can enhance the mechanical toughness of the high-voltage cable polypropylene insulating material.

In an embodiment, the thermoplastic polyolefin elastomer includes one or more of ethylene-octene copolymer, polyethylene, ethylene-vinyl acetate copolymer, polypropylene, or ethylene-propylene rubber. Preferably, the thermoplastic polyolefin elastomer is selected from polypropylene elastomers which contains 50 to 70 parts by weight of ethylene-propylene rubber and 30 to 50 parts by weight of polypropylene. In this way, the dispersibility of polypropylene can be ensured and the compatibility between the thermoplastic polyolefin elastomer and the polypropylene in-reactor alloy can be enhanced.

The antioxidant can prevent the aging of the high-voltage cable polypropylene insulating material. In an embodiment, the antioxidant is selected from hindered phenol antioxidants. For example, the antioxidant can be pentaerythritol tetrakis[β-(3,5-di-tert-butyl-4-hydroxyphenyl)propionate], dilauryl thiodipropionate, or phosphite ester.

In an embodiment, the flexural modulus of the high-voltage cable polypropylene insulating material is in a range from 100 MPa to 600 MPa. The high-voltage cable polypropylene insulating material provided in the present application has an excellent toughness since its flexural modulus is moderate. A low flexural modulus would result in insufficient cable rigidity, affecting the long-term creep resistance of the cables. A high flexural modulus would lead to inadequate toughness of the high-voltage cable polypropylene insulating material, failing to meet the requirements for cables.

In an embodiment, the high-voltage cable polypropylene insulating material exhibits an elongation under load greater than or equal to 13%.

In an embodiment, the high-voltage cable polypropylene insulating material exhibits a permanent deformation rate less than or equal to 11%.

The high-voltage cable polypropylene insulating material provided in the present application exhibits low modulus, high elasticity, and excellent mechanical properties, significantly reducing the flexural modulus of the composite material and thus enabling an excellent toughness.

In an embodiment, the high-voltage cable polypropylene insulating material exhibits a breakdown field strength greater than or equal to 130 MV/m. The high-voltage cable polypropylene insulating material provided in the present application a high breakdown field strength, demonstrating excellent electrical performance.

In a second aspect of the present application, a method for preparing the high-voltage cable polypropylene insulating material as described in any one of the embodiments in the first aspect of the present application is provided, including the following steps:
melt-blending the polypropylene in-reactor alloy, the thermoplastic polyolefin elastomer, and the antioxidant in the specified parts by weight and extruding to prepare the high-voltage cable polypropylene insulating material.

In an embodiment, the temperature of the melt-blending is in a range from 150 °C to 200 °C. It should be understood that the temperature of the melt-blending can be any value selected from 15 0°C to 220 °C. Specifically, the temperature can be, but is not limited to, 150 °C, 180 °C, 190 °C, 200 °C, 210 °C, or 220 °C.

In an embodiment, the time period of the melt-blending is in a range from 5 min to 15 min. It should be understood that the time period of the blending can be any value selected from 5 min to 15 min. Specifically, the time period of the blending can be, but is not limited to, 5 min, 8 min, 12 min, 13 min, or 15 min.

In an embodiment, a process parameter of the blending include: a rotation speed which is in a range from 80 r/min to 180 r/min. It should be understood that the rotation speed can be any value in the range from 80 r/min to 180 r/min. Specifically, the rotation speed can be, but is not limited to, 80 r/min, 85 r/min, 90 r/min, 95 r/min, 100 r/min, 130 r/min, 150 r/min, or 180 r/min. By setting the process parameter of the blending, the dispersibility and compatibility between the components of the high-voltage cable polypropylene insulating material can be enhanced.

In a third aspect of the present application, use of the high-voltage cable polypropylene insulating material described in any one of the embodiments of the present application in high-voltage AC cable insulating materials is provided. The high-voltage cable polypropylene insulating material provided in the present application has various applications. For example, the high-voltage cable polypropylene insulating material can be used in 110 kV high-voltage AC cables.

The following are specific examples. Unless otherwise specified, all raw materials used in the examples are commercially available products.

### Example 1

60 parts of a polypropylene in-reactor alloy resin (in which a mass ratio of a rubber phase to a homopolymer polypropylene was 1:4, a degree of isotacticity of the homopolymer polypropylene was ≥ 95%, a phase size of the rubber phase was 0.2 µm to 1.0 µm, and the rubber phase was an ethylene-propylene random copolymer), 40 parts of a thermoplastic polypropylene elastomer (with a density of 0.89 g/cm³ and a melt flow index (230 °C × 2.16 kg) of 0.8 g/10 min), and 0.3 parts of an antioxidant (hindered phenol antioxidant 1010, commercially available) were weighed as raw materials, placed into a closed mixer, melt-blended, and extruded to obtain a high-voltage cable polypropylene insulating material. The melt-blending process was performed at a temperature of 200 °C for a time period of 15 min at a rotation speed of 90 r/min.

### Example 2

50 parts of a polypropylene in-reactor alloy resin (in which a mass ratio of a rubber phase to a homopolymer polypropylene was 1:4, a degree of isotacticity of the homopolymer polypropylene was ≥ 95%, a phase size of the rubber phase was 0.2 µm to 1.0 µm, and the rubber phase was an ethylene-propylene random copolymer), 50 parts of a thermoplastic polypropylene elastomer (with a density of 0.89 g/cm³ and a melt flow index (230 °C × 2.16 kg) of 0.8 g/10min), and 0.3 parts of an antioxidant (hindered phenol antioxidant 1010, commercially available) were weighed as raw materials, placed into a closed mixer, melt-blended, and extruded to obtain a high-voltage cable polypropylene insulating material. The melt-blending process was performed at a temperature of 200 °C for a time period of 15 min at a rotation speed of 90 r/min.

### Example 3

40 parts of a polypropylene in-reactor alloy resin (in which a mass ratio of a rubber phase to a homopolymer polypropylene was 1:4, a degree of isotacticity of the homopolymer polypropylene was ≥ 95%, a phase size of the rubber phase was 0.2 µm to 1.0 µm, and the rubber phase was an ethylene-propylene random copolymer), 60 parts of a thermoplastic polypropylene elastomer (with a density of 0.89 g/cm³ and a melt flow index (230 °C × 2.16 kg) of 0.8 g/10 min), and 0.3 parts of an antioxidant (hindered phenol antioxidant 1010, commercially available) were weighed as raw materials, placed into a closed mixer, melt-blended, and extruded to obtain a high-voltage cable polypropylene insulating material. The melt-blending process was performed at a temperature of 200 °C for a time period of 15 min at a rotation speed of 90 r/min.

### Example 4

30 parts of a polypropylene in-reactor alloy resin (in which a mass ratio of a rubber phase to a homopolymer polypropylene was 1:4, a degree of isotacticity of the homopolymer polypropylene was ≥ 95%, a phase size of the rubber phase was 0.2 µm to 1.0 µm, and the rubber phase was an ethylene-propylene random copolymer), 70 parts of a thermoplastic polypropylene elastomer (with a density of 0.89 g/cm³ and a melt flow index (230 °C × 2.16 kg) of 0.8 g/10 min), and 0.3 parts of an antioxidant (hindered phenol antioxidant 1010, commercially available) were weighed as raw materials, placed into a closed mixer, melt-blended, and extruded to obtain a high-voltage cable polypropylene insulating material. The melt-blending process was performed at a temperature of 200 °C for a time period of 15 min at a rotation speed of 90 r/min.

### Example 5

30 parts of a polypropylene in-reactor alloy resin (in which a mass ratio of a rubber phase to a homopolymer polypropylene was 1:3, a degree of isotacticity of the homopolymer polypropylene was ≥ 95%, a phase size of the rubber phase was 0.2 µm to 1.0 µm, and the rubber phase was an ethylene-propylene random copolymer), 70 parts of a thermoplastic polypropylene elastomer (with a density of 0.85 g/cm³ and a melt flow index (230 °C × 2.16 kg) of 0.5 g/10 min), and 1 part of an antioxidant were weighed as raw materials, placed into a closed mixer, melt-blended, and extruded to obtain a high-voltage cable polypropylene insulating material. The melt-blending process was performed at a temperature of 150 °C for a time period of 5 min at a rotation speed of 90 r/min.

### Comparative Example 1

70 parts of a polypropylene in-reactor alloy resin (in which a mass ratio of a rubber phase to a homopolymer polypropylene was 1:4, a degree of isotacticity of the homopolymer polypropylene was ≥ 95%, a phase size of the rubber phase was 0.2 µm to 1.0 µm, and the rubber phase was an ethylene-propylene random copolymer), 30 parts of a thermoplastic polypropylene elastomer (with a density of 0.89 g/cm³ and a melt flow index (230 °C × 2.16 kg) of 0.8 g/10 min), and 0.3 parts of an antioxidant (hindered phenol antioxidant 1010, commercially available) were weighed as raw materials, placed into a closed mixer, melt-blended, and extruded to obtain a high-voltage cable polypropylene insulating material. The melt-blending process was performed at a temperature of 200 °C for a time period of 15 min at a rotation speed of 90 r/min.

### Comparative Example 2

20 parts of a polypropylene in-reactor alloy resin (in which a mass ratio of a rubber phase to a homopolymer polypropylene was 1:4, a degree of isotacticity of the homopolymer polypropylene was ≥ 95%, a phase size of the rubber phase was 0.2 µm to 1.0 µm, and the rubber phase was an ethylene-propylene random copolymer), 80 parts of a thermoplastic polypropylene elastomer (with a density of 0.89 g/cm³ and a melt flow index (230 °C × 2.16 kg) of 0.8 g/10 min), and 0.3 parts of an antioxidant (hindered phenol antioxidant 1010, commercially available) were weighed as raw materials, placed into a closed mixer, melt-blended, and extruded to obtain a high-voltage cable polypropylene insulating material. The melt-blending process was performed at a temperature of 200 °C for a time period of 15 min at a rotation speed of 90 r/min.

### Comparative Example 3

100 parts of a polypropylene in-reactor alloy resin (in which a mass ratio of a rubber phase to a homopolymer polypropylene was 1:4, a degree of isotacticity of the homopolymer polypropylene was ≥ 95%, a phase size of the rubber phase was 0.2 µm to 1.0 µm, and the rubber phase was an ethylene-propylene random copolymer) and 0.3 parts of an antioxidant (hindered phenol antioxidant 1010, commercially available) were weighed as raw materials, placed into a closed mixer, melt-blended, and extruded to obtain a high-voltage cable polypropylene insulating material. The melt-blending process was performed at a temperature of 200 °C for a time period of 15 min at a rotation speed of 90 r/min.

### Comparative Example 4

100 parts of a homopolymer polypropylene and 0.3 parts of an antioxidant (hindered phenol antioxidant 1010, commercially available) were weighed as raw materials, placed into a closed mixer, melt-blended, and extruded to obtain a high-voltage cable polypropylene insulating material. The melt-blending process was performed at a temperature of 200 °C for a time period of 15 min at a rotation speed of 90 r/min.

The high-voltage cable polypropylene insulating materials prepared and obtained in the examples and comparative examples were characterized and tested for the flexural modulus, the crystal structure, and the thermal endurance.

The testing methods or standards were as follows:
(1) Flexural modulus: tested based on GB/T9341-2008;
(2) Electrical performance: tested based on GB/T 1408.1-2016;
(3) Crystal structure: characterized using a differential scanning calorimeter (TA Q250), where approximately 5 mg of the sample was placed in an open crucible and heated from room temperature to 200 °C at a heating rate of 10 °C/min under a nitrogen atmosphere, and the heat flow signal varied with temperature was recorded.
(4) Thermal endurance test: to evaluate whether the insulating material can maintain the required mechanical strength at the expected overload temperature, the specimen was prepared according to the tensile property testing method. The standard testing method of thermal elongation test was adopted. The specimen was suspended by one end in an oven. The temperature of the oven was set to 150 °C. A weight equivalent to a tensile strength of 0.2 MPa based on the cross-section of the specimen was applied to the other end of the specimen. After a set time period of 15 min, the elongation of the specimen was measured and defined as the elongation under load. The elongation after cooling was defined as the permanent deformation rate.

The test results are shown in Table 1:

**Table 1**

| Sample | Flexural modulus (MPa) | Breakdown field strength (MV/m) | Melting temperature (°C) | Elongation under load (%) | Permanent deformation rate (%) | Crystallinity degree (%) |
|---|---|---|---|---|---|---|
| Example 1 | 499.3 | 138.4 | 164.6 | 2.0 | 1.0 | 20.9 |
| Example 2 | 378.2 | 152.5 | 164.2 | 3.0 | 2.5 | 16.9 |
| Example 3 | 337.5 | 149.3 | 163.7 | 5.0 | 4.0 | 13.9 |
| Example 4 | 258.2 | 143.9 | 163.4 | 12.5 | 10.0 | 13.3 |
| Example 5 | 205.8 | 124.4 | 163.8 | 12.2 | 9.8 | 12.5 |
| Comparative Example 1 | 722.7 | 125.8 | 164.1 | 0.5 | 0.0 | 23.1 |
| Comparative Example 2 | 176.3 | 117.2 | 163.5 | / | / | 9.9 |
| Comparative Example 3 | 938.3 | 268.9 | 164.4 | / | / | 35.5 |
| Comparative Example 4 | 1452.4 | / | 161.6 | / | / | 46.1 |

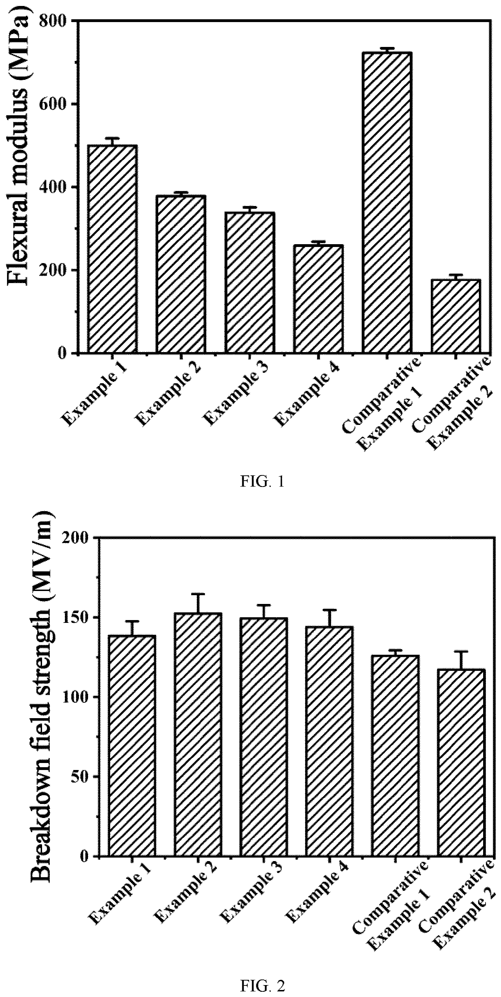

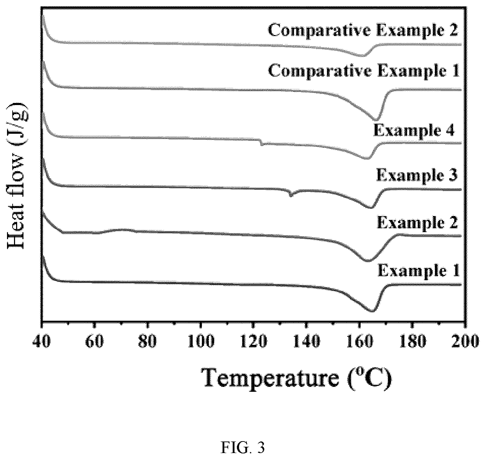

From the results in Table 1 and FIG. 1-3, it can be seen that the insulating materials prepared in Examples 1-4 have appropriate flexural moduli, which can ensure the rigidity and toughness of the insulating materials. In addition, the insulating materials prepared in Examples 1 to 4 have high crystallinities, high melting temperatures, low elongations under loads and permanent deformation rates at high temperatures, indicating that the insulating materials obtained in the examples have excellent thermal endurances. Furthermore, the relatively high breakdown field strengths indicate that the insulating materials have excellent electrical stabilities. Therefore, the insulating materials provided in the present application have excellent comprehensive performances. In Example 5, the increase in the content of the rubber phase in the polypropylene in-reactor alloy and the decrease in the density of the polypropylene elastomer are beneficial for increasing the mechanical toughness; a higher amount of antioxidant slightly reduces the electrical insulating performance, which is though still at a relatively high level. The material still maintains good thermal stability mainly due to the presence of the polypropylene crystal backbone.

Although the polypropylene insulating material prepared in Comparative Example 1 has lower elongation under load and permanent deformation rate at the high temperature, its flexural modulus is too high (>600 MPa), and the toughness of the material is insufficient, failing to meet the requirements of cables. The flexural modulus of the polypropylene insulating material prepared in Comparative Example 2 is slightly lower, and the rigidity of the material is slightly weaker. In addition, the thermal endurance of the polypropylene insulating material prepared in Comparative Example 2 is poor; during testing, the sample exhibited excessive deformation under load, directly reaching the bottom of the oven, so that no accurate value was not obtained. The polypropylene insulating materials prepared in Comparative Example 3 and Comparative Example 4 both have defects such as high flexural moduli, susceptibility to deformation, and insufficient toughness, making the insulating materials inadequate for practical applications.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above embodiments only express several implementations of the present application for a specific and detailed understanding of the technical solutions of the present application, but they should not be construed as limiting the scope of protection of the invention patent. It should be noted that for those of ordinary skill in the art, various modifications and improvements can be made without departing from the concept of the present application, and all fall within the protection scope of the present application. It should be understood that the technical solutions obtained by those skilled in the art through logical analysis, reasoning, or limited experimentation based on the technical solutions provided in the present application are within the scope of protection of the attached claims in present application. Therefore, the scope of protection of the present patent application shall be defined by the appended claims, and the specification can be used to interpret the content of the claims.

## Claims

1. A high-voltage cable polypropylene insulating material, with raw materials thereof comprising following parts by weight of components:
| | |
|---|---|
| a polypropylene in-reactor alloy resin: | 30 parts to 60 parts; |
| a thermoplastic polyolefin elastomer: | 40 parts to 70 parts; and |
| an antioxidant: | 0.3 parts to 1 part. |

2. The high-voltage cable polypropylene insulating material according to claim 1, wherein the polypropylene in-reactor alloy resin comprises a rubber phase and a homopolymer polypropylene in a mass ratio ranged from 1:3 to 1:4.

3. The high-voltage cable polypropylene insulating material according to claim 2, wherein the degree of isotacticity of the homopolymer polypropylene is greater than or equal to 95%.

4. The high-voltage cable polypropylene insulating material according to claim 2, wherein the phase size of the rubber phase in the polypropylene in-reactor alloy resin is in a range from 0.2 µm to 1 µm.

5. The high-voltage cable polypropylene insulating material according to claim 2, wherein the rubber phase is selected from ethylene-propylene random copolymers.

6. The high-voltage cable polypropylene insulating material according to any one of claims 1 to 5, wherein the thermoplastic polyolefin elastomer has one or more of following features:
(1) the density of the thermoplastic polyolefin elastomer is in a range from 0.85 g/cm³ to 0.89 g/cm³;
(2) the melt flow index of the thermoplastic polyolefin elastomer is in a range from 0.5 g/10 min to 0.8 g/10 min at 230°C under a 2.16 kg load;
(3) the thermoplastic polyolefin elastomer is selected from polypropylene.

7. The high-voltage cable polypropylene insulating material according to any one of claims 1 to 5, wherein the antioxidant is selected from hindered phenol antioxidants.

8. A method for preparing the high-voltage cable polypropylene insulating material according to any one of claims 1 to 7, comprising the following steps:
melt-blending the polypropylene in-reactor alloy, the thermoplastic polyolefin elastomer, and the antioxidant in the specified parts by weight and extruding to prepare the high-voltage cable polypropylene insulating material;
wherein the temperature of the melt-blending is in a range from 150 °C to 200 °C.

9. The method according to claim 8, wherein the time period of the melt-blending is in a range from 5 min to 15 min.

10. Use of the high-voltage cable polypropylene insulating material according to any one of claims 1 to 7 in high-voltage alternating current cable insulating materials.
